Europäisches Patentamt

European Patent Office

Office européen des brevets

(11) Publication number: **0 217 556**
**A2**

(12) **EUROPEAN PATENT APPLICATION**

(21) Application number: **86306822.7**

(51) Int. Cl.⁴: **A63D 15/08**

(22) Date of filing: **03.09.86**

(30) Priority: **06.09.85 GB 8522200**

(43) Date of publication of application:
**08.04.87 Bulletin 87/15**

(84) Designated Contracting States:
**AT BE CH DE FR GB IT LI LU NL SE**

(71) Applicant: **Tele-Cue Limited**
**Unit 3E Mullacott Cross Industrial Estate**
**Ilfracombe North Devon(GB)**

(72) Inventor: **Desmond, Peter Alfred**
**West Clayes Lee**
**Ilfracombe North Devon(GB)**
Inventor: **Rich, James Sidney**
**Three Steps Main Road**
**Berrynarbor Devon(GB)**

(74) Representative: **Knowles, Audrey Elizabeth**
**624 Pershore Road**
**Selly Park Birmingham B29 7HG(GB)**

(54) **Games cues.**

(57) A non-spring loaded cue for billiards, poole, snooker and the like telescopically adjustable for length. Two co-axial sections (130, 131) are telescopically engaged and locked in position by a locking device (134) which may be operated by an external ring or by relative axial rotation of the two sections.

EP 0 217 556 A2

FIG.6.

This invention relates to improvements to cues as used in the games of billiards, snooker, pool, bar-billiards and the like. The word "cue" in this specification is intended to encompass cues (or cue sticks) intended or adapted for use in any of these games.

Billiard cues are traditionally made of wood either in one piece or of several pieces glued or laminated together. Recently cues have been made in pieces screwed for assembly to form a cue of the length required; dismantled, the cue is then easier to transport, carry or store due to the shorter length of the individual pieces. However before used these have to be re-assembled and if during play a longer length of cue is required either an extension piece would need to be fitted or a separate longer cue obtained; the opposite of course applies if a shorter cue is required, as for instance in playing pool.

The prior art discloses cues consisting of a number of telescopically related parts. However, some of these (e.g. Scroggins U.S. Patent Number 3740034) are intended to collapse or fold into a more easily transportable configuration and extend or unfold into an operation configuration for use, while others (e.g. Evans U.S. Patent Number 3711093, Fox et al U.S. Patent Number 3858882 and Di Luzio U.S. Patent Number 4134588) are spring actuated so that the release of the energy of a spring rather than the strength of the player provides the impulse when a stroke is played. Nowhere to our knowledge does the prior art disclose a cue, the length of which is continuously adjustable but which can be locked into a length of the player's choice to play a stroke.

It is therefore an object of the invention to provide a rigid (i.e. non-spring loaded) cue of continuously adjustable lengths.

It is another object of the invention to provide a rigid cue which can be quickly and easily adjusted for length so that the player can suit the length of the cue to each stroke he plays.

It is a further object of the invention to provide an adjustable cue which can be locked by relative rotation of two co-axial parts without the need for any key or button.

Still further objects of the invention will become apparent to the skilled reader from a perusal of the following specification, drawings and claims.

## SUMMARY OF THE INVENTION

Our cue according to the invention differs from existing forms of cues in that the means of altering or adjusting the desired length of the cue according to the shot to be played are available without the need to fit an extension piece or use an additional separate cue. The cue according to the invention has a self-contained means to enable the user to instantly alter and adjust the overall length of the cue as desired. A range of materials other than the traditional wood can be used in its construction offering a variety of designs and finishes.

This invention contemplates a cue, the length of which is continuously telescopically adjustable between two extremes comprising at least two co-axial sections received one within the other and a locking device to fix the relative axial positions of two sections.

In this specification, the section received in the other section is called "the received section" and vice versa.

In preferred embodiments the two co-axial sections of the cue will comprise a butt section and a central section adapted to receive a cue tip, either by threadable or by frictional engagement. The butt section may be telescopically received in the central section or vice versa.

The locking device may take a number of forms. These include external split collet devices which may be mounted on the receiving section, whether this is the butt or central section; also included are internal locking devices operatable by relative axial rotation of two coaxial parts of the cue, for example the recieved and receiving sections.

In a preferred embodiment the lock is comprised in the butt section and is axially spaced from the grip, and the central section comprises a rod slideably receivable in the coaxial bores in the lock and grip.

In one improved version, the lock is comprised in the central section rather than the butt section, and the butt section comprises a rod slideably receivable in co-axial bores in the lock and the central section.

We have discovered that this configuration gives substantial advantages of balance and handle over the configuration already described in which the lock is part of the butt section.

Also within the invention is the application of the principle of the invention to a type of prior art extension piece now in use.

One known method of extending cues when the need arises entails the use of an extension piece with a socket at one end which is a push fit over the butt end of a conventional standard length cue. The other end of the extension piece is a conventional butt. In use the extension piece is fitted over the butt end of the standard cue.

We have now discovered that the principle of a telescopically extendable cue as disclosed in our earlier application can be advantageously applied to the extension piece rather than the cue itself.

Thus we now provide a cue extension comprising a butt section including a hand grip, a central section adapted for telescopic engagement with the butt section and having a socket adapted to take by push fit the butt of a standard length cue, and a lock to fix the relative axial positions of the butt and central sections. In effect this is a telescopically extendable cue as described above, in which the means to mount the cue tip is a socket adapted to take the butt of a standard cue.

In the new cue extension described above the lock may be comprised either in the butt or in the central section.

Further, according to the present invention, we provide a telescopically extendable cue comprising a butt section and a central section, the central section having means at its outer end to receive and retain a tip, and an internal lock operable by relative rotation of the central and butt sections about their common axis or of two parts of the same section to prevent or restrain relative telescopic movement of the butt and central sections.

The cue according to the invention may be constructed either with a central section having a rearwardly extending tube or rod which is telescopically received inside the butt section, or a butt section with a forwardly extending tube or rod which is telescopically received inside the central section. According to which form is chosen, the internal lock will be mounted, respectively, either on the end of the rearwardly extending tube or rod of the central section, or on the forward end of the forwardly extending tube or rod of the butt section. In both cases the "forward" end of the cue is that which strikes the ball, and the "rear" end of the cue is that which is grasped by the player. It will be convenient throughout this description to refer to the telescopically combined sections of the cue as the "received" and "receiving" sections, it being understood that each of these may be either the butt or the central section.

According to one embodiment of the invention, the internal lock comprises a split internally bevelled collet retained between two opposed externally bevelled cones the first such cone being slidedly received but not rotatable in the receiving section of the cue and the other cone being rotatable inside the receiving section but non-rotatably mounted on the received section, the received and receiving sections being threadably engaged so that relative rotation of the received and receivable sections in one sense brings them together causing the surfaces of the cones to bear upon the internally bevelled surfaces of the collet to urge the collets outwardly against the internal surface of the receiving section and prevent or restrain relative telescopic movement of the received and receiving sections.

According to another embodiment of the invention, the lock comprises a resiliently compressible cylindrical element with external conical surfaces at its ends, the received section being slideably received in the cylindrical element which is retained between opposed internal conical faces respectively formed into threadably engaged components of the receiving section such that relative rotation of the two components brings the internal conical faces to bear on the cylindrical element compressing the cylindrical element and causing the internal face thereof to engage with the received section of the cue whereby telescopic movement of the received and receiving sections of the cue is restrained or prevented.

Preferred embodiments of the invention will now be described with reference to the drawings, in which:-

Figure 1 is a general isometric view of a preferred embodiment and

Figure 2 is an axial sectional view of the same embodiment

Figure 3 is an enlarged cross sectional view taken along the line A-A in Figure 2

Figure 4 is a general isometric view of a telescopically extendable cue according to the invention in which the lock is comprised in the butt section.

Figure 5 is an axial sectional view of the same embodiment.

Figure 6 is a general isometric view, corresponding to Figure 4, of a cue according to the present invention in which the lock is comprised in the central, rather than the butt, section.

Figure 7 is an axial sectional view, corresponding to Figure 5, of a cue according to the present invention in which the lock is comprised in the central, rather than the butt, section.

Figures 8 and 9 are respectively a general isometric view and an axial sectional view of a cue extension according to the present invention in which the lock is comprised in the butt section.

Figure 10 is a general isometric view of a cue extension according to the present invention in which the lock is comprised in the central section.

Figures 11a and 11b show respectively in axial cross section, and in general isometric view, the locking device preferably used according to the invention.

Figures 12a to 12f show one form of an embodiment described in general terms above, in which the lock comprises an outwardly expanding split collet mounted on the rearward end of the central section, which is in this instance the received section.

Figures 13a to 13e show, in various views, a different form of the same embodiment in which the lock is mounted on the forward end of the butt section, which is in this case the received section.

Figures 14a to 14e show the embodiment also generally described above in which the lock comprises a compressible split collet mounted inside the receiving section of the cue (in this case the butt section), the receiving section being divided into two components relative rotation of which operates the lock.

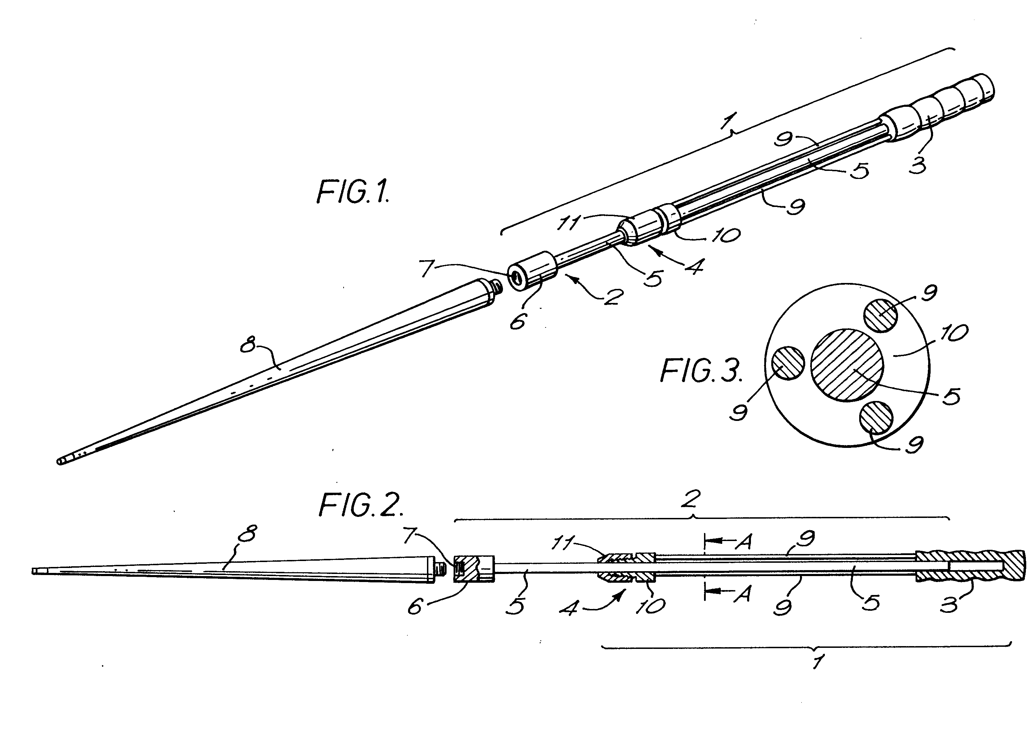

The embodiment shown in the Figures 1 to 3 of the drawings consists of a butt section 1 in which a central section 2 is telescopically received. The butt section comprises a grip 3 and, axially spaced therefrom, a lock 4. The grip 3 and lock 4 are axially bored to receive a rod 5 forming part of the central section 2. Central section 2 comprises a generally cylindrical part 6 having a threaded socket 7 to receive the threaded end of a cue tip 8. Grip 3 is rigidly spaced apart from lock 4 in the embodiment shown by three spacing rods 9 equally spaced about and parallel to the central rod 5 - (see Figure 3). Rod 5 passes through a bore in lock 4 and into an axial cylindrical bore in grip 3. The lock 4 consists of a collet device comprising a core 10 (preferably of nylon) threadably engaged in a knurled grip 11. Knurled grip 11 is threadably mounted on core 10 and when tightened compresses core 10 to grip rod 5 securely and fix the relative axial positions of the butt and central sections.

Rod 5 must be a good sliding fit in lock 4 and grip 3.

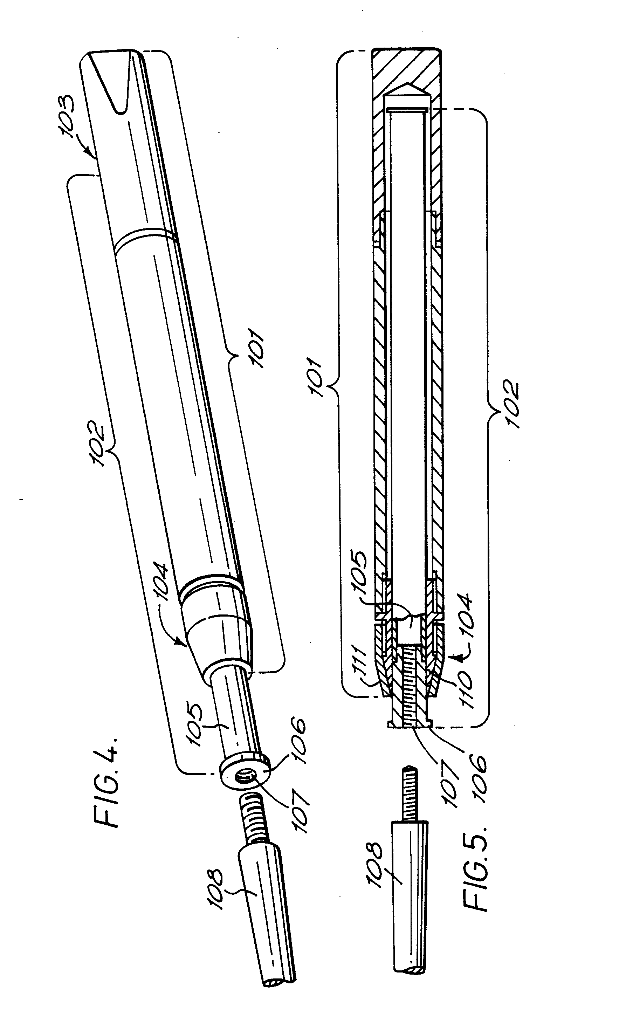

Turning now to Figures 4 and 5, these show another preferred embodiment of the invention.

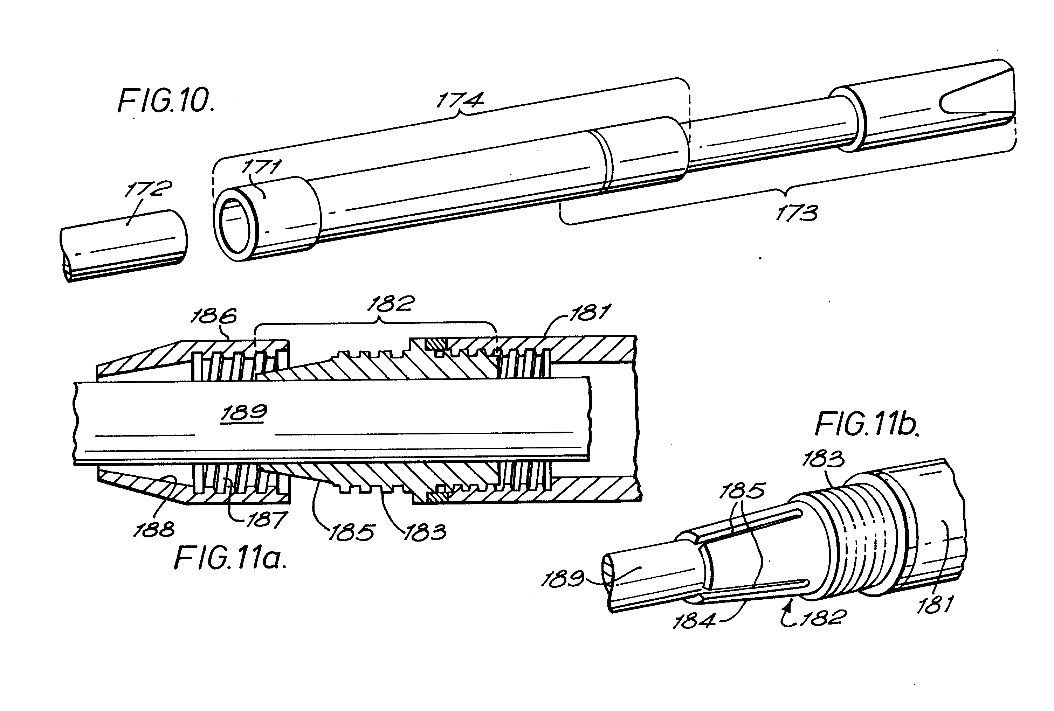

The embodiment shown consists of a butt section 101 in which a central section 102 is telescopically received. The butt section comprises a grip 103 and a lock 104. The grip 103 and lock 104 are axially bored to receive a cylindrical tube or rod 105 constituting the main part of the central section 102. Although this part is described herein for brevity as a rod it will be understood that a tube of similar diameter may equally well be used with a saving in weight and is within the scope of the invention. At the outer end of central section 102 is a collar or bush 106 having a threaded socket 107 to receive the threaded end of a cue tip 108. Rod 105 passes through a bore in lock 104 and into an axial cylindrical bore in grip 103. The lock 104 consists of a collet device (as shown in Figures 11a and 11b and described below in more detail) comprising a core 110 (preferably of nylon) threadably engaged in a grip 111. Knurled grip 111 is threadably mounted on core 110 and when tightened compresses core 110 to grip rod 105 securely and fix the relative axial positions of the butt and central sections.

Rod 105 must be a good sliding fit in lock 104 and grip 103.

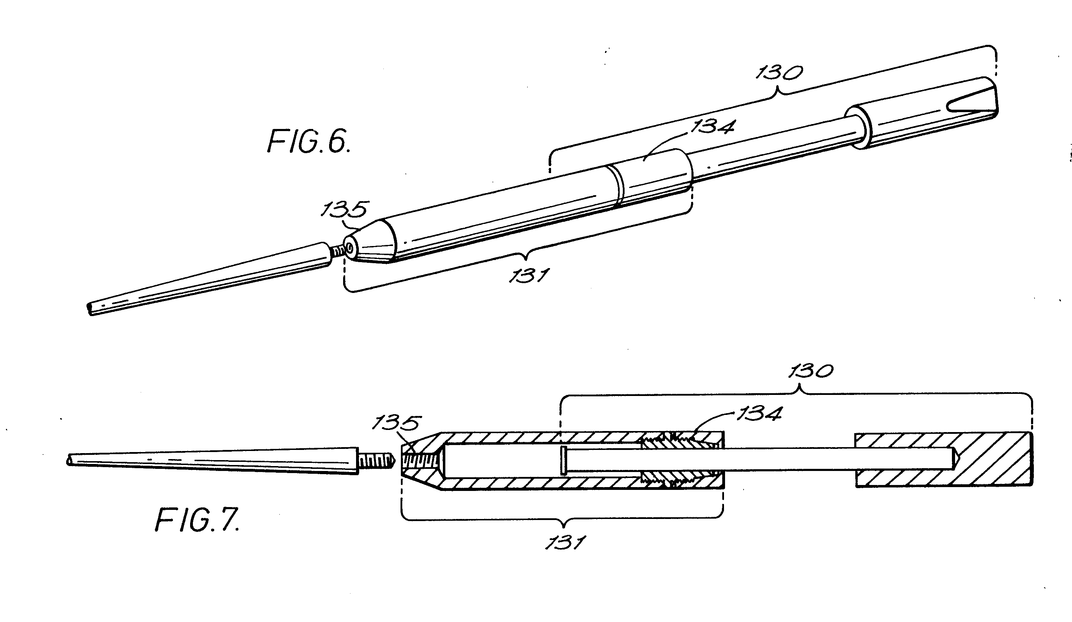

Figures 6 and 7 show a preferred embodiment of a telescopic cue within the scope of our invention in which the lock is comprised in the central section rather than the butt section. In these Figures, the butt section is shown generally at 130 and the central section generally at 131. The butt section 130 comprises a grip 132 and a rod 133 slideably received in the central section 131. At the rear end of the central section 131 is a a lock shown generally as 134 and at the opposite end a plug 135 tapped to receive a cue tip 136. The central part 137 of the central section is a rod or tube. The lock 134 can be of the same type as described subsequently in the present description with reference to Figures 11a and 11b; however in the embodiment shown in Figures 6 and 7 the locking ring is preferably entirely cylindrical, rather than having a frusto-conical section, so as to form a straight continuous outline when the butt and central sections are closed up.

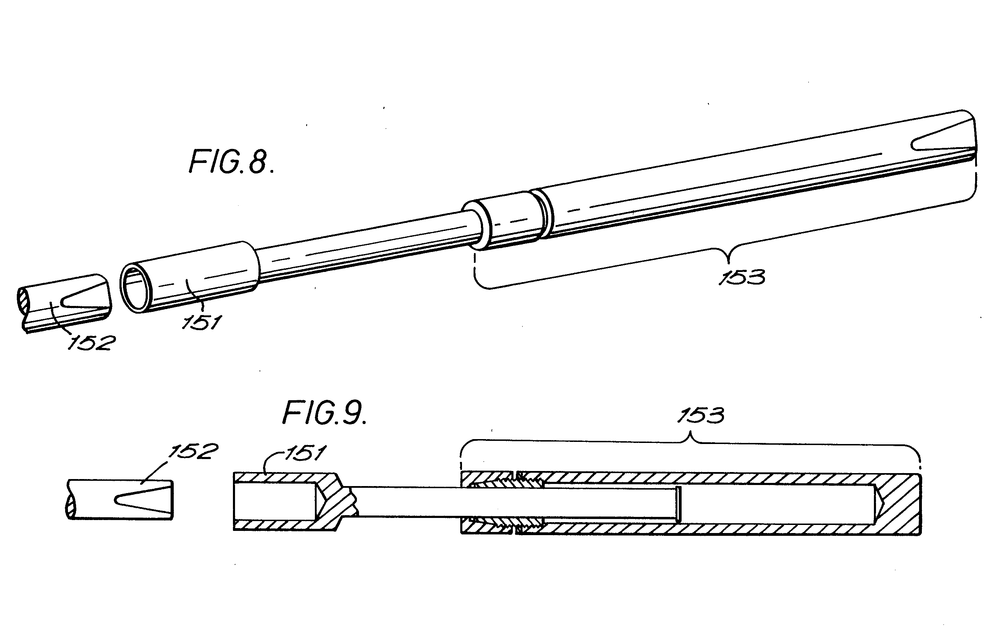

Figures 8 and 9 show a telescopic cue extension according to the present invention corresponding generally to that shown in Figures 4 and 5 but in which the tapped bush or collar 106 is replaced by a socket 151 adapted to receive and retain the butt of a cue of standard length 152. The butt section 153 of the embodiment shown in Figures 8 and 9 is as described above with reference to Figures 5 and 6 and will not be described herein in more detail. The socket 151 may be made of any suitable material the choice of which is within the capacity of those skilled in the art, but it is preferred to use a slightly flexible natural rubber or plastics material which is capable of holding and retaining the cue butt 152 by means of a push fit while giving the whole assembly, cue plus extension, sufficient regidity.

Figure 10 shows a modification of the extendable cue described with reference to Figures 6 and 7, in which the tapped bush 135 is replaced by a socket 171 adapted to receive and retain the butt of a standard cue 172. The butt section 173 and the central section 174 of this cue extension are - (apart from the socket 171) similar to that described above with reference to Figures 8 and 9.

Although we have already stated that the locking device used is a form of the well-known collet device as used in chucks and many other applications, we describe below for the sake of completeness the particular form which this device takes in billiard cues according to preferred embodiments of the invention. Such a device is shown in axial cross-section in Figure 11a and in an isometric view in Figure 11b. The butt section of the cue is shown at 181 and carries co-axially therewith a core 182 formed of nylon or other resilient material. The core 182 comprises a cylindrical threaded portion 183 and a tapering frusto-conical section 184 divided by radial slots 185 which divide the conical part 184 into tongues. The lock also comprises a generally cylindrical cover 186 with a internally threaded part 187 adapted to threadably engage the threaded part 183 of the core and a frusto-conical part 188 dimensioned to bear on the tongues. When the cylindrical part 186 is engaged with the core 182 and tightened the tongues are forced against the rod or tube 189 received in the lock and axial movement of the rod or tube 189 in the grip 181 is prevented.

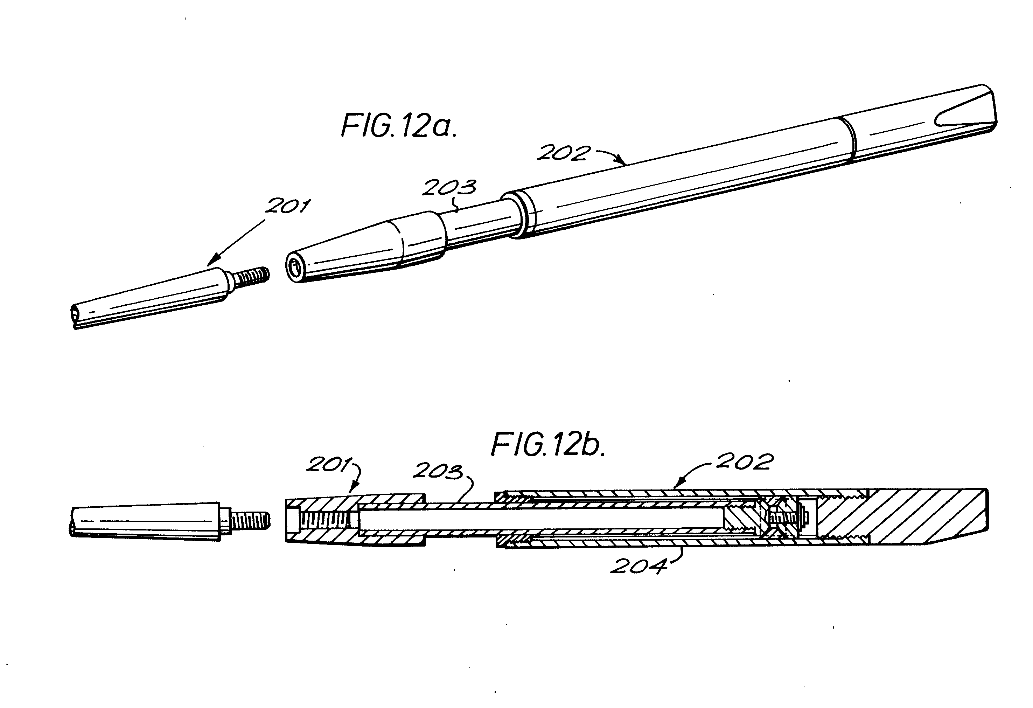

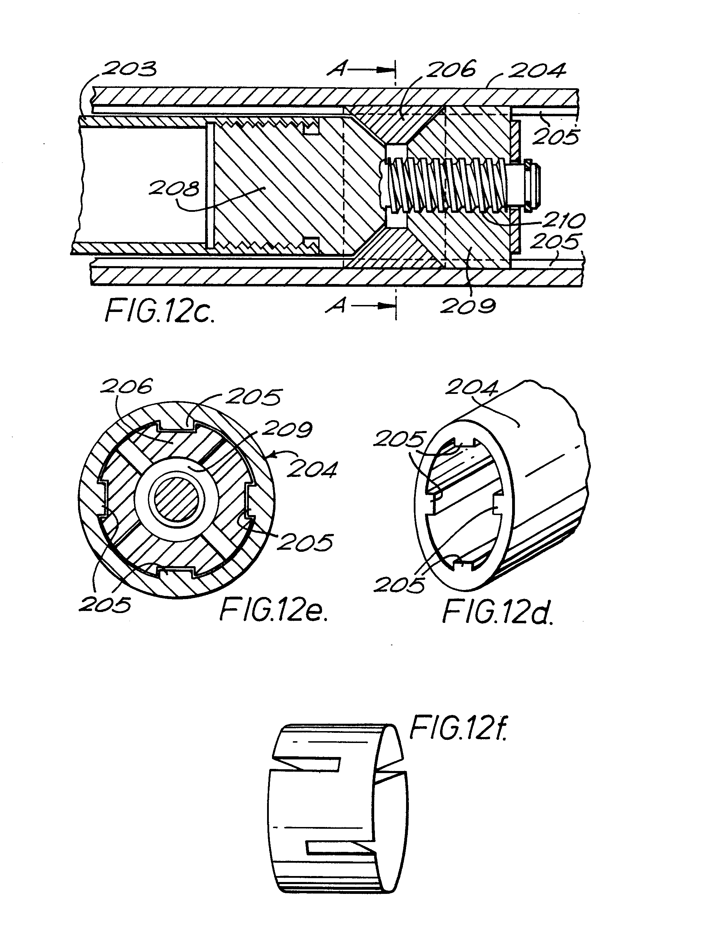

Turning now to the embodiment shown in Figures 12a to 12e, the cue is shown generally in isometric view in Figure 12a; the central section shown generally at 201 is received inside the butt section shown generally at 202. The whole of the central and butt sections is shown in axial cross section in Figure 12b; the lock is shown in similar view, but greatly enlarged, in Figure 12c and in cross section along the line A-A, in Figure 12e. Figure 12d shows the splines formed on the inside of the butt section tube 204.

As can be seen from Figure 12b, central section 201 comprises a tube 203 extending into a tube 204 which forms the forward portion of the butt section 202. At the rearward end of the tube 203 is a lock shown generally in Figure 12b and in greater detail in Figures 12c and 12d. This tube 204 is formed with internal longitudinal splines 205 which engage the circumference of an internally bevelled split collet 206 shown separately in Figure 12f. This collet is preferably formed of a resilient plastics material such as nylon and is axially slotted from each end, the slots extending from each end being at right angles to each other, in known manner, to give the collet resilient compressibility. The tube 203 ends in a cone 208 the conical surfaces of which bear against the bevelled surfaces of the collet 206. On the other side of the collet 206 is a sliding member 209 with conical faces bearing on the other end of the collet 206. A threaded extension 210 of the cone 208 is threadably engaged in the slideable member 209. Slideable member 209 is engaged in the splines 205 which prevent it from rotating inside tube 204.

It will be seen that relative rotational movement of the tubes 203 and 204 will, by virtue of the engagement of the boss 210 in the slideable element 209 tend to bring the opposed faces of the conical members 208 and 209 together thus expanding the collet 206 outwardly against the internal surface of the tube 204 and restraining or preventing telescopic adjustment of the length of the cue. Thus with the conical members 208 and 209 spaced apart and exerting no pressure on the collet 206, the cue can be adjusted for length by sliding the central and butt sections 201 and 202 telescopically; when the desired length is reached a quick twist of the two sections relative to each other in the appropriate direction brings the conical members 208, 209 together, bearing on the corresponding faces of the collet 206, which is expanded outwardly against the internal surface of the tube 204, and prevents further telescopic adjustment to the length of the cue.

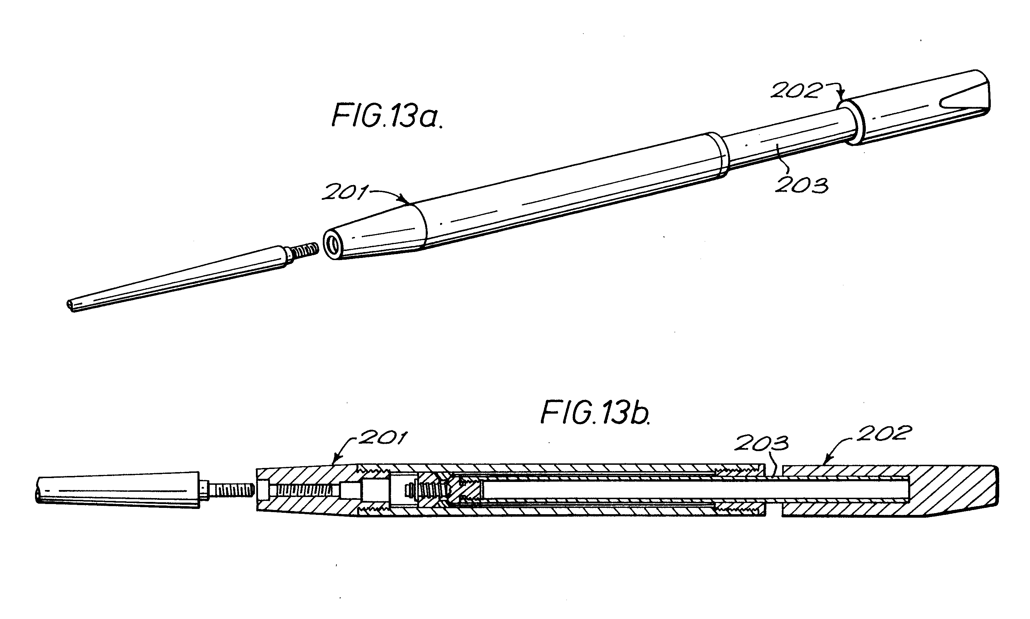

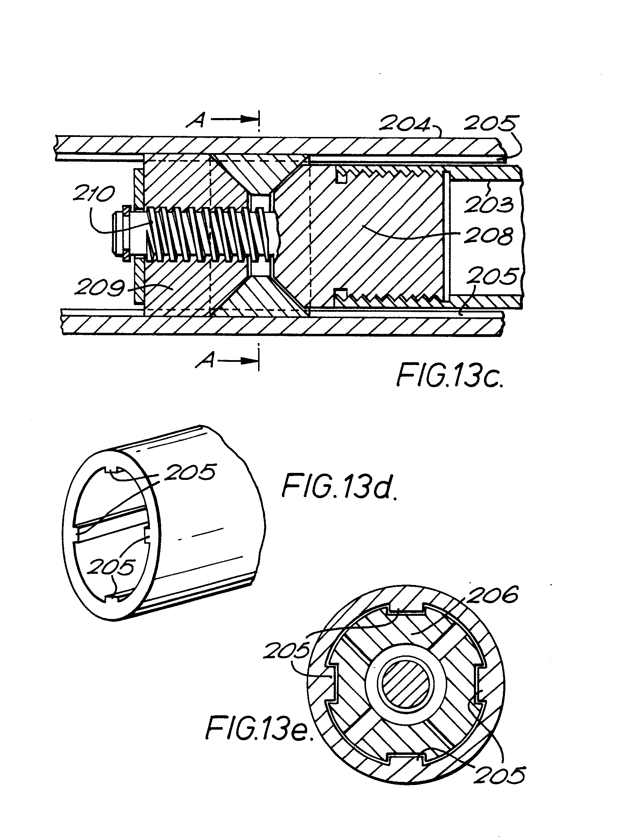

The telescopic cue shown in a corresponding manner in Figures 13a to 13e operates in a similar manner, like numerals denoting the corresponding parts, and we shall not give an exhaustive description of its mode of operation as it can be fully understood with the aid of the above description.

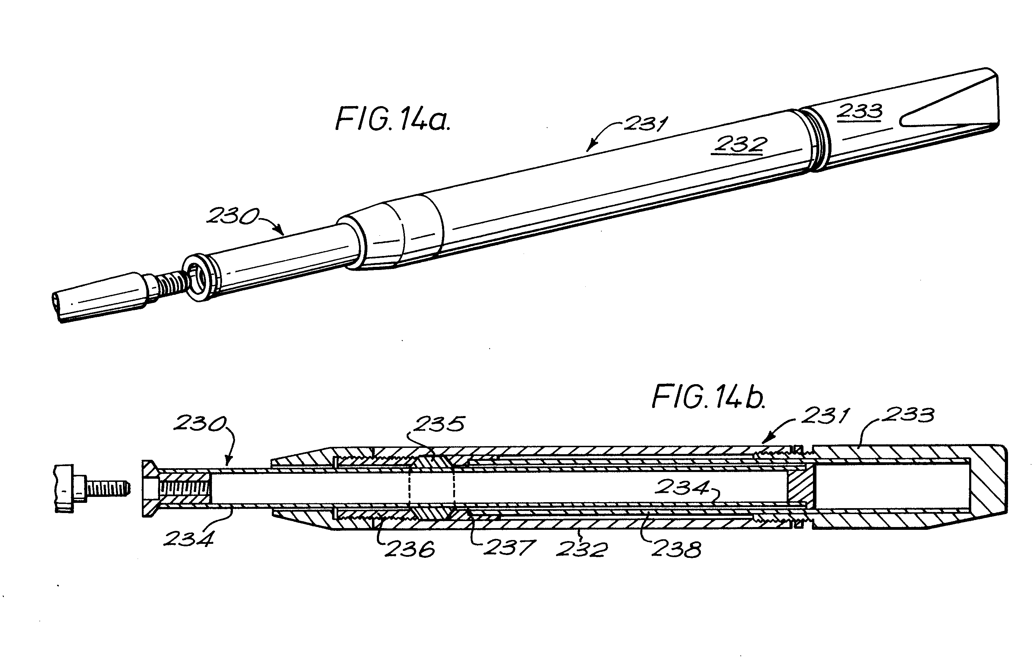

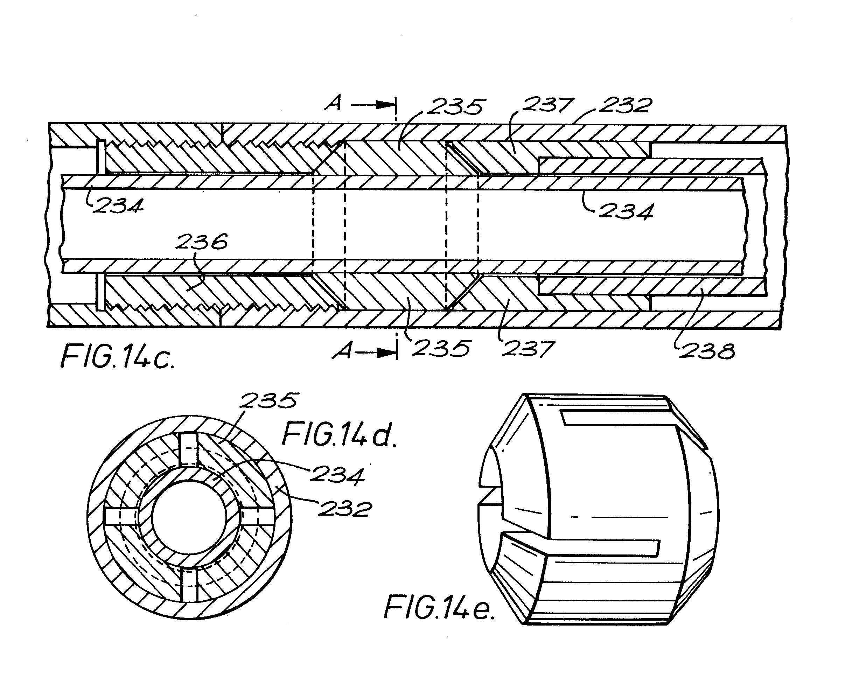

Figures 14a to 14d show a further embodiment of the invention in which the central section shown generally at 230 is received in the butt section, shown generally at 231, and the latter is split into two components 232 and 233 which are threadably engaged. As can be seen from Figure 14b the central section comprises a tube 234 extending into the forward component 232 of the butt section through the internal bore of a cylindrical split collet 235. This collet 235 and its associated components together form the lock and are shown in more detail in axial and diametric cross-sections respectively in Figures 14c and 14d, Figure 14e showing the collet alone. Inside tube 232 is a stop member 236 with an internal conical face at its rear end. A sleeve 237 is slideably received in the bore of tube 232 and has a forwardly facing internal conical face at its forward end. Engaged in an annular recess in the sleeve 237 is a tube 238 integral with the rear component 233 of the butt section. Between the opposed conical faces of the stop 236 and the sleeve 237 is the collet 235, which in this embodiment has externally bevelled ends.

The forward and rear components of the butt section, 231 and 233 respectively, are threadably engaged so that relative rotation of these components brings about axial movement. Such relative movement to bring the two components together brings the internal conical faces of the stop member 236 and the sleeve 237 into engagement with the collet 235 and cause it to contract upon the external surface of the tube 234 integral with the central section 230, thus preventing or restraining telescopic movement of the two sections of the cue. Again, a quick twist of the rear component of the butt section in the opposite direction releases the pressure on the cylindrical element and enables the cue to be adjusted for length according to the invention.

Instead of a single slotted split collet, as illustrated in Figures 12f and 12e, a plurality of separate collets may be used, for example two hemicylindrical collets.

Although many materials can be used to give cues according to the invention the desired handle, appearance and balance, as well as mechanical strength, it has been found especially suitable to make the working parts of aluminium or one of its alloys. The grip however can be made of wood, and the cue tip in the traditional wood with a threaded end for assembly, as in existing cue tips. For serious players, balance is as important as appearance. The cue, according to the invention, can be supplied with tips of various lengths to give a greater range of available lengths than the inbuilt range of the sliding telescopic adjustment of the cue itself.

The invention is not limited to the embodiments specifically described and many variations are possible within the overall scope of the invention.

**Claims**

1. A cue for biliards, pool, snooker and like games characterized in that its length is continuously telescopically adjustable by means of at least two co-axially engaged sections (130, 131) one of which is received telescopically in the other and a lock (134) to fix the relative axial positions of the engaged sections by frictional engagement.

2. A cue as claimed in Claim 1 comprising butt and central sections (101, 102) wherein the lock - (104) is mounted on the forward end of the butt section (101) and the rearward part of the central section (102) is telescopically received in the lock - (104) and the butt (101) section.

3. A cue as claimed in Claim 1 comprising butt and central sections (130, 131) wherein the lock - (134) is mounted on the rearward end of the central section (131) and the forward part of the butt section (130) is telescopically received in the lock - (134) and the central section (131).

4. A cue as claimed in Claim 1 wherein the lock is operated by relative axial rotation of the co-axially engaged sections.

5. A cue as claimed in Claim 4 wherein the lock is mounted on the end of the internal section - (203) and located inside the external section (202) and is operable by relative rotation of the internal and external sections between a locked position in which an outer surface of the lock is frictionally engaged with the inner surface of the external section and a free position in which the said outer surface is disengaged from the said inner surface to allow relative axial movement of the received and receiving sections.

6. A cue as claimed in Claim 5 wherein the lock comprises an internally bevelled split collet - (206) and relative rotation in one sense of the internal and external sections (201, 203) expands the collet which is thereby brought into frictional engagement with the inner surface of the external section.

7. A cue as claimed in Claim 5, wherein the lock comprises an externally bevelled split collet - (235) and relative rotation in one sense of the internal and external sections (230,231) compresses the collet which is thereby brought into frictional engagement with the outer surface of the internal section.

Neu eingereicht
Nouvellement
déposé

0 217 556

FIG.1.

FIG.3.

FIG.2.

FIG.4.

FIG.5.

0 217 556

FIG.6.

130

134

135

131

FIG.7.

135

130

134

131

0 217 556

FIG.8.

153

151

152

FIG.9.

152

151

153

Neu eingereicht
Nouvellement

FIG.10.

174

172    171

173

186    182    181

189

188    187    185    183

FIG.11a.

FIG.11b.

183

185

189

184    182    181

0 217 556

FIG.12a.

*202*

*203*

*201*

FIG.12b.

*201*   *203*   *202*

*204*

0 217 556

FIG.12c.

FIG.12e.

FIG.12d.

FIG.12f.

Neu eingereicht
Nouvellem

FIG.13a.

201

202

203

FIG.13b.

201

202

203

Nachgereicht
Nouvellement

FIG.13c.

FIG.13d.

FIG.13e.

FIG.14a.

FIG.14b.

FIG.14c.

FIG.14d.

FIG.14e.